# EUROPEAN PATENT SPECIFICATION

(11) **EP 4 144 913 B1**
(45) Date of publication and mention of the grant of the patent: **22.04.2026**
(21) Application number: 22188136.0
(22) Date of filing: 01.08.2022
(51) Int. Cl.: D21D 5/02

(54) **PULP SCREENING MACHINE**
ZELLSTOFFSIEBMASCHINE
MACHINE DE CRIBLAGE DE PÂTE

(30) Priority: 01.09.2021 CN 202111021322
(43) Date of publication of application: 08.03.2023
(73) Proprietor: Andritz (China) Ltd., Foshan, Guangdong 528000 (CN)
(72) Inventor: GSCHEIDER, Alexander, 8785 Hohentauern (AT)
(74) Representative: Tschinder, Thomas

(56) References cited:
- EP-A1- 0 795 641
- EP-A1- 1 273 696
- EP-A2- 0 719 890
- EP-A2- 1 124 004
- CN-U- 201 648 840

## Description

### TECHNICAL FIELD

The invention relates to a pulp screening machine for screening the fiber suspension.

### BACKGROUND

Fiber suspension screening is a common process in the paper industry and especially important for recycled fibers. For different applications different types of screens are in use.

For furnishes of high strength and high slushing resistance (containing for example unbleached kraft fibers), disc-type screens are mainly in use. Such screens are commonly comprising a flat screen plate and a disc type rotor with several vanes. Screens with such designs can provide better de-flaking efficiency than basket type screens. Although these disc type screens require higher power, those are still widely used as the fiber yield can be increased.

Besides high power consumption (mainly due to high rotor tip speed), the disc type screens have many disadvantages in other respects. On one hand is fast wearing of the rotor and the screen plate (and even the machine housing) and a capacity reduction rather fast due to related wearing. Reasons are that the conditions at the screen plate are changing from inside (close to the hub) to the outer area of the screen plate as the tip speed is a function of the radius. Higher throughput in the outer area is the logical result, but due to higher tip speed in the outer area, also the wearing is the fastest there. Another disadvantage is, that rather big machines are required, due to the fact, that a flat screen plate does have relatively small screening area compared to a basket type screen.

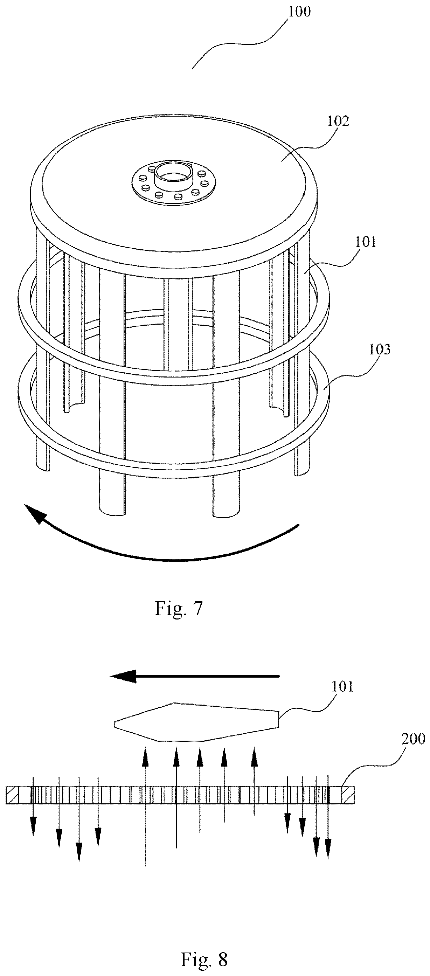

Figs. 7 and 8 illustrate the in-flow pulp screening machine according to the conventional art, in which the rotor vanes are provided outside the basket type screen. The rotor vanes are usually with some sort of Hydro-foil design and very gentle. In Figs. 7 and 8, thick arrows indicate the rotation direction of the screen, while the thin arrows shows the flow in and out the screen caused by the Hydro-foil design of the rotor vanes 101. Each rotor vanes are connected to each other with rings 103, as shown in Fig. 7. Such design avoids the rotor vanes cantileveredly extending out, thus ensures the position stability of the rotor vanes, but it is not suitable for the pulp immediately after coarse screening, because the rings 103 easily renders tangling and accumulation of the impurities. Hence, such design adapts for the scenario that does not require significant de-flaking effect, that is, such design requires the feed pulp contains less coarse impurities. Such design screens are used in Paper machine approach flow screening or in fine screening systems (after a coarse screening has been applied already).
EP 0 719 890 A2, EP 1 273 696 A1 and EP 0 795 641 A1 disclose screening devices with a rotor which rotates around the outside of a cylindrical screen.

### SUMMARY

To overcome said shortcomings of the state of art, the present invention provides a pulp screening machine as defined by claim 1.

The pulp screening machine in the present invention replaces the flat screen plate with a basket type screen. The rotor is designed in a similar foil-type geometry, but the rotor vanes are provided outside of the screen. As the pulp inlet is provided outside of the screen and the accept outlet is provided inside of the screen, the accept flows to the inside of the screen, whereas the rejects are kept outside of the pulp screening machine and removed away from the pulp screening machine preferably in tangential direction from the reject outlet provided outside the screen. Comparing with the state of art, in which the pulp inlet is provided inside of the screen, accept outlet is provided outside of the screen, such "in-flow" operating design according to this invention brings the beneficial effect that it reduces wearing to the screen inside due to the centrifugal forces. Therefore, the coarse heavies, which will cause severe wearing to the screen, will no longer stay inside the screen. Moreover, coarse heavies could be gathered by a junk trap tangentially provided on the housing of the pulp screening machine.

As the rotor vanes cantileveredly extending intc the region of the screen do not connect to each other, and no ring is provided, the tangling and accumulation of the impurities can be avoided to the largest extent. In the meantime, the rotor vanes thus have some flexibility, renders that un slushed paper flakes (fibre bundles) can be de-flaked between the cantilevered rotor vanes and the screen. Therefore, the pulp screening machine of the present invention can be applied for processing the pulp immediately after the pulping step as a so called coarse screening system, so as to further de-flaking the pulp and remove coarse impurities at lowest fibre losses.

The screen of the pulp screening machine is conical which gradually tapers down as extending upwards. The rotor vanes are designed with a matched shape respectively so that it can sweep over the surface of the screen.
According to the invention the screen angle α between the screen of the pulp screening machine and the horizontal plane is greater than or equal to 45°, and less than 90°.
Alternatively the screen angle α between the screen of the pulp screening machine and the horizontal plane is in the range of 75° to 90°.

According to the preferable embodiment of the pulp screening machine in the present invention, projecting strips are provided on the outside surface of the screen of the pulp screening machine. The projecting strips are preferable made of wear resistant material which shows good wearing resistant effect to further enhance de-flaking and avoiding accumulation of rejects between rotor and basket. The strips are preferably provided with sharp edges which enhance de-flaking and keep the power low. The strips could be a separate part welded or bolted or mounted by means of both welding and bolting on the outside surface of the screen, or integrated on the outside surface of the screen.

Preferably, the projecting strips on the outside of the screen surface are provided angled to the front edge of the rotor vane. Further preferably, the angle between the strips and the front edge of the rotor vane is larger than 90 degrees. Of course, the strips and the vanes could also be provided vertically or in other angles. Angles >90 degrees reduces wearing, whereas angles <90 degrees improving de-flaking efficiency.

Preferably, on the outside surface of the screen of the pulp screening machine, the strips extend across approximately the same range in the height of screen as each front edges of the rotor vanes does. Thus de-flaking effects of the screen is enhanced at its total height.

Each strip could be designed as a single strip which extends across the screen height. But preferably, several groups of the strips are provided on the outside surface of the screen of the pulp screening machine, together extend across the height of the screen.

Furthermore, within the scope of the present invention, the projecting strips could be replaced by the concave grooves on the outside surface of the screen to allow the rotor vanes mounted closer to screens, so that the pulp screening machine is provided with better de-flaking effect and higher throughput.

Obviously, instead of through grooves, the grooves are provided with bottom. Projecting strips are provided on the place without screening holes or slots, but grooves could be also used at the perforated area - means more open area is provided, which means increase throughput.

According to one of the preferred embodiments in the present invention, the widths of the grooves are increasing from the feed side of the screen to the reject discharge side. Due to the "wiping effect", the amount of collected impurities on the rotor vane front edge will increase from the top (feed side) of the screen to bottom (reject side). The increased grooves width from the top of the screen to the bottom adapts to such increasing amount of collected impurities.

According to one of the preferred embodiments in the present invention, the depths of the grooves are increasing from the feed side of the screen to the reject discharge side. Due to the "wiping effect", the amount of collected impurities on the rotor vane front edge will increase from the top (feed side) of the screen to bottom (reject side). The increased grooves depth from top of the screen to the bottom adapts to such increasing amount of collected impurities.

According to one of the preferred embodiments in the present invention, the widths and depths of the grooves are increasing from the feed side of the screen to the reject discharge side. Due to the "wiping effect", the amount of collected impurities on the rotor vane front edge will increase from the top (feed side) of the screen to bottom (reject side). The increased grooves width and depth from top of the screen to the bottom adapts to such increasing amount of collected impurities.

Similarly, concave grooves on the outside surface of the screen of the pulp screen machine are provided angled to the front edge of the rotor vane. Further preferably, the angle between the grooves and the front edge of rotor vane is larger than 90 degrees. It is no doubted that the grooves and the vanes could also be provided vertically or in other angles.

Preferably, on the outside surface of the screen of the pulp screening machine, the concave grooves approximately extend across the same range in the height of screen as each front edge of the rotor vane does. Thus de-flaking effects of the screen is enhanced at its total height.

Each groove could be designed as a single groove which stretches across the whole height of the screen. But preferably is that several groups of the grooves are provided on the outside surface of the screen of the pulp screening machine, together extend across the height of the screen.

The screen is perforated screen or slotted-screen. For the slotted screen, the slots are preferably provided angled to the front edge of the rotor vane. The slots are provided angled to the front edge of the rotor vane. Thus the transportation capacity of the pulp and reject from the pulp inlet to the reject outlet is enhanced and meanwhile the screen basket is kept clean.

The advantages in the present invention to the pulp screening machine are as follows: Firstly, compared with flat screen plate the ratio of the provided screen area to the size of the pulp screening machine is remarkably increased. For same volume capacity a smaller machine can be used. Secondly, due to utilizing the screen area in a better way with lower tip speed the power consumption is reduced. Meanwhile, the wearing of the screen caused by centrifugal force is reduced remarkably because of lower tip speed and applied in-flow principle, and heavies are moved away from the outside of the screen instead of staying at the inside of the screen. Besides, it is easier to change rotors or rotor vanes because the rotors are provided outside of the screen.

### BRIEF DESCRIPTION OF THE DRAWINGS

FIG. 1 schematically shows section view of an embodiment of the pulp screening machine according to the present invention, wherein only the screen and the rotor are presented.
FIG. 2 schematically shows section view of another embodiment of the pulp screening machine not covered by this invention, wherein only the screen and the rotor are presented.
FIG. 3 schematically shows section view of a further embodiment of the pulp screening machine not covered by this invention, wherein only the screen and the rotor are presented.
FIG. 4 schematically shows the rotor and the screen of the pulp screening machine according to the present invention.
FIG.5 schematically shows the projecting strips outside the screens of the pulp screening machine according to the present invention.
FIG.6 schematically shows the screen and the rotor according to the present invention.
FIG. 7 and 8 illustrate the in-flow pulp screening machine according to the conventional art.

### DETAILED DESCRIPTION

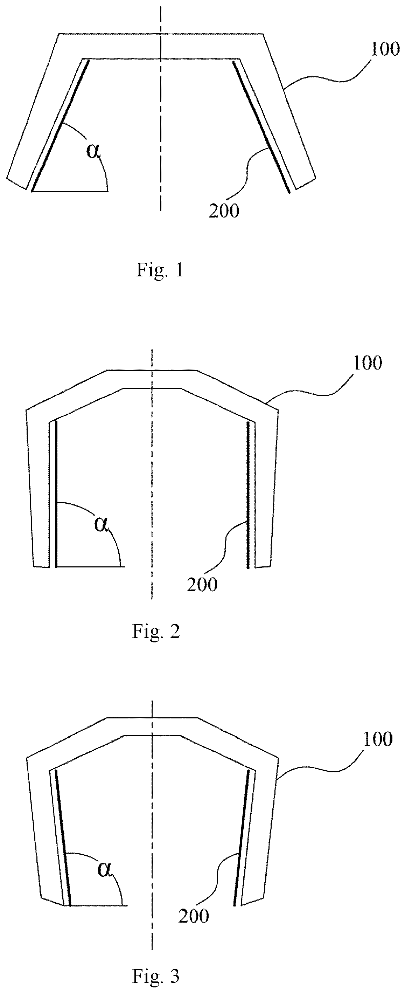

Fig. 1 schematically shows the section view in an embodiment of the present application of the pulp screening machine, wherein only the basket type screen and the rotor are presented. As Fig.1 shows, the screen 200 of the pulp screening machine is conical which gradually tapers down as extending upwards. The Rotor 100 rotates around the outside of the screen 200, wherein the accept outlet (not shown) is provided inside the screen 200, the pulp inlet (not shown) and the reject outlet (not shown) are provided outside the screen 200.

Fig. 2 schematically shows the section view in another embodiment of the pulp screening machine not covered by the present invention, wherein only the screen and the rotor are presented. As Fig.2 shows, the screen 200 of the pulp screening machine is cylindrical which extends vertically upwards. The Rotor 100 rotates around the outside of the screen 200.

Fig. 3 schematically shows the section view in a further embodiment of pulp screening machine not covered by the present invention, wherein only the screen and the rotor are presented. As Fig.3 shows, screen 200 of the pulp screening machine is conical which gradually widens up as extending upwards. The Rotor 100 rotates around the outside of the screen 200.

The screen angle α, which refers to the angle between the screen and the horizontal plane shown in Fig.1, should be in the range of 45° to less than 90°. It has been found that an angle <90° enhance the de-flaking, whereas the angle >90° will improve the accept quality.

At comparable de-flaking efficiency, the tip speed of the pulp screening machine can be reduced by up to 30%, which reduces the power consumption remarkably and in addition prolongs the lifecycle of the basket and the rotor.

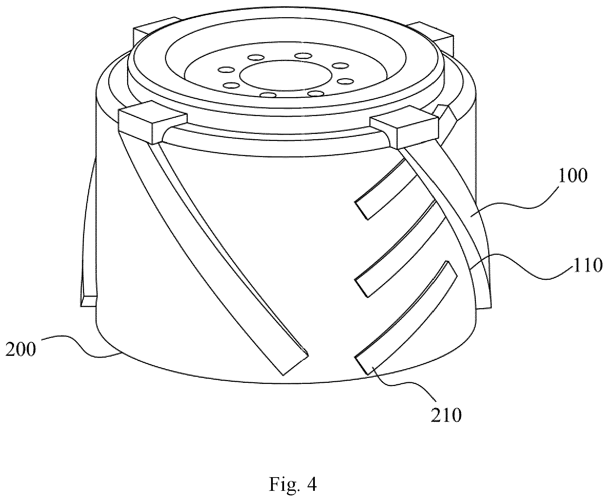

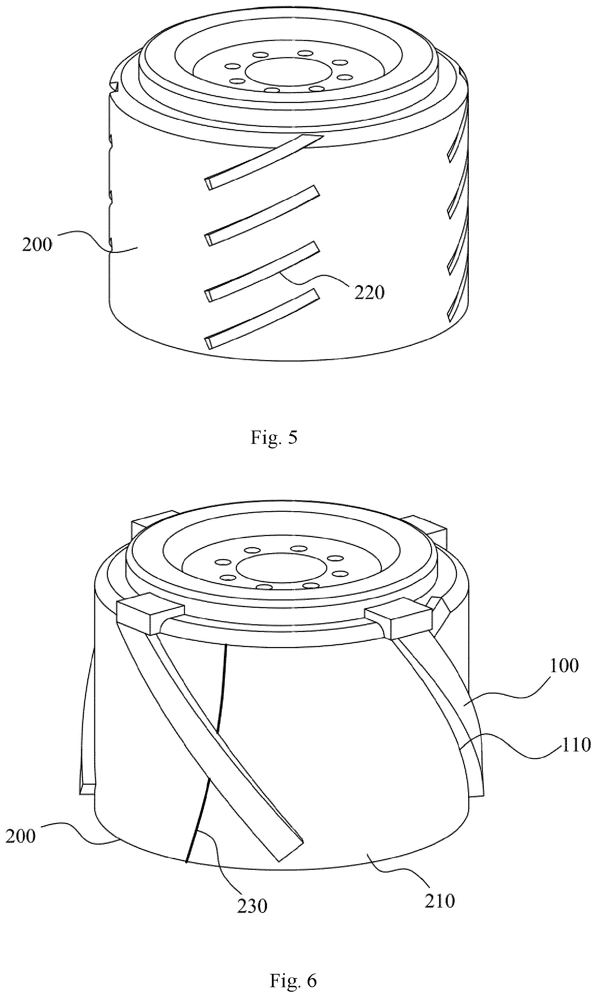

Fig.4 schematically shows the rotor and the screen of the pulp screening machine in isometric view according to the present invention. As Fig.4 shows, rotor 100 is designed around the outside of the screen 200. The projecting strip 210 are provided on the outside surface of the screen 200. Strip 210 is applied to improve the de-flaking efficiency and to avoid the accumulation of the rejects (impurities) between the rotor and screen. In different embodiments strips could also be replaced with grooves to reach similar technical effects. Fig.5 schematically shows the rotor and the screen of the pulp screening machine in isometric view according to the present invention. The concave grooves 220 are provided on the outside surface of the screen 200.

Depending on the applied furnishes and application conditions the slotted baskets can be applied, which results in better accept quality at still high de-flaking efficiency. The slots 230 are provided angled to the rotation axis, which enhances the transportation of the slurry and impurities from feed to reject side and keeps the screen basket clean. Fig.6 schematically shows the screen 200 and the rotor 100 according to the present invention, wherein the screen 200 is slotted screen. One of the slots 230 on the outside surface of the screen 200 is shown in Fig.6, which is provided angled to the front edge 110 of the rotor vane.

The above discloses the preferable embodiments of this invention, while the scope of this invention are not limited within the specific contents disclosed here. Those skilled in the art can develop more embodiments and applications according to teaching of this invention, and these embodiments and applications also belong to the scope of this invention. Therefore, it could be understood that the specific embodiments do not further limit the scope of this invention, which is defined by the claims.

### Reference number list

- 100: rotor
- 101: rotor vane
- 102: rotor base
- 103: ring
- 110: front edge of the rotor vane
- 200: screen
- 210: projecting strip
- 220: concave grooves
- 230: slot

## Claims

1. A Pulp screening machine comprising:
a screen (200) which extends upwards from the bottom of the pulp screening machine, and a rotor (100) which rotates around the outside of the screen (220),
wherein an accept outlet is provided inside the screen (200), a pulp inlet and a reject outlet are provided outside the screen (200),
wherein rotor vanes (101) of the rotor (100) cantileveredly extend from a rotor base (102) on top of the screen (200) into a region of the screen (200),
with the rotor vanes (101) not being connected to each other in the region of the screen (200),
wherein the rotor vanes have a rigidity adapted for de-flaking in cooperation with the outside surface of the screen,
**characterized in that**
the screen (200) of the pulp screening machine is conical which gradually tapers down as extending upwards and wherein the screen angle α between the screen of the pulp screening machine and the horizontal plane is greater than or equal to 45°, and less than 90°.

2. The pulp screening machine (100) according to Claims 1, **characterized in that**, projecting strips (210) are provided on the outside surface of the screen (200) of the pulp screening machine.

3. The pulp screening machine according to Claim 2, **characterized in that**, the projecting strips (210) on the outside surface of screen (200) are provided angled to the front edge (110) of the rotor vanes.

4. The pulp screening machine according to Claim 2 or 3, **characterized in that**, on the outside surface of the screen (200) of the pulp screening machine, the projecting strips (210) extend across the same range in the height of screen (200) as each front edge (110) of the rotor vanes does.

5. The pulp screening machine according to one of Claims 2 to 4, **characterized in that**, several groups of strips (210) are provided on the outside surface of the screen (200) of the pulp screen machine, together extending across the height of the screen.

6. The pulp screening machine according to Claim 1, **characterized in that**, concave grooves (220) are provided on the outside surface of the screen (200) of the pulp screen machine.

7. The pulp screening machine according to Claim 6, **characterized in that**, concave grooves (220) on the outside surface of the screen (200) of the pulp screen machine are provided angled to the front edge (110) of the rotor vanes.

8. The pulp screening machine according to Claim 6 or 7, **characterized in that**, the widths of the grooves (220) are increasing from the top of the screen (200) to the bottom of the screen (200).

9. The pulp screening machine according to any of Claims 6 to 8, **characterized in that**, the depths of the grooves (220) are increasing from the top of the screen (200) to the bottom of the screen (200).

10. The pulp screening machine according to any of Claims 6 to 9, **characterized in that**, on the outside surface of the screen (200) of the pulp screening machine, the concave grooves (220) extend across the same range in the height of screen (200) as each front edge (110) of the rotor vane does.

11. The pulp screening machine according to any of Claims 6 to 10, **characterized in that**, several groups of the grooves (220) are provided on the outside surface of the screen (200) of the pulp screen machine, together extending across the height of the screen.

12. The pulp screening machine according to any of the Claims 1 to 11, **characterized in that**, the screen (200) is a perforated screen.

13. The pulp screening machine according to any of the Claims 1 to 11, **characterized in that**, the screen (200) is a slotted screen.

14. The pulp screening machine according to Claim 13, **characterized in that**, the slots of the screen (200) are provided angled to the front edge (110) of the rotor vanes.

15. The pulp screening machine according to Claim 13, **characterized in that**, the slots of the screen (200) are provided angled to the rotation axis of the rotor.

16. Pulp screening machine according to any of the Claims 1 to 15, **characterized in that**, a junk trap is tangentially provided on the housing of the pulp screening machine for removing coarse heavies.

## Patentansprüche

1. Eine Faserstoffsiebmaschine, umfassend:
ein Sieb (200), das sich vom Boden der Faserstoffsiebmaschine nach oben erstreckt, und einen Rotor (100), der sich um die Außenseite des Siebes (200) dreht,
wobei ein Gutstoffauslass innerhalb des Siebs (200) und ein Faserstoffeinlass und ein Rejektauslass außerhalb des Siebs (200) vorgesehen sind,
wobei sich Rotorflügel (101) des Rotors (100) von einem Rotorkörper (102) auf der Oberseite des Siebes (200) auskragend in einen Bereich des Siebes (200) erstrecken,
wobei die Rotorflügel (101) in dem Bereich des Siebes (200) nicht miteinander verbunden sind,
wobei die Rotorflügel eine Steifigkeit aufweisen, die für das Entstippen im Zusammenwirken mit der Außenfläche des Siebes geeignet ist,
**dadurch gekennzeichnet, dass** das Sieb (200) der Faserstoffsiebmaschine konisch ist, das sich nach oben hin allmählich verjüngt, und wobei der Siebwinkel α zwischen dem Sieb der Faserstoffsiebmaschine und der horizontalen Ebene größer als oder gleich 45° und kleiner als 90° ist.

2. Faserstoffsiebmaschine (100) nach Anspruch 1,
**dadurch gekennzeichnet, dass** an der Außenfläche des Siebes (200) der Faserstoffsiebmaschine vorstehende Streifen (210) vorgesehen sind.

3. Faserstoffsiebmaschine nach Anspruch 2,
**dadurch gekennzeichnet, dass** die vorstehenden Streifen (210) an der Außenfläche des Siebes (200) schräg zur Vorderkante (110) der Rotorflügel vorgesehen sind.

4. Faserstoffsiebmaschine nach Anspruch 2 oder 3,
**dadurch gekennzeichnet, dass** sich die vorstehenden Streifen (210) auf der Außenfläche des Siebs (200) der Faserstoffsiebmaschine über denselben Bereich in der Höhe des Siebs (200) erstrecken wie jede Vorderkante (110) der Rotorflügel.

5. Faserstoffsiebmaschine nach einem der Ansprüche 2 bis 4, **dadurch gekennzeichnet, dass** auf der Außenfläche des Siebes (200) der Faserstoffsiebmaschine mehrere Gruppen von Streifen (210) vorgesehen sind, die sich gemeinsam über die Höhe des Siebes erstrecken.

6. Faserstoffsiebmaschine nach Anspruch 1, **dadurch gekennzeichnet, dass**, konkave Nuten (220) auf der Außenfläche des Siebes (200) der Faserstoffsiebmaschine vorgesehen sind.

7. Faserstoffsiebmaschine nach Anspruch 6,
**dadurch gekennzeichnet, dass** konkave Nuten (220) auf der Außenfläche des Siebes (200) der Faserstoffsiebmaschine schräg zur Vorderkante (110) der Rotorflügel vorgesehen sind.

8. Faserstoffsiebmaschine nach Anspruch 6 oder 7,
**dadurch gekennzeichnet, dass** die Breite der Nuten (220) von der Oberseite des Siebes (200) zur Unterseite des Siebes (200) zunimmt.

9. Faserstoffsiebmaschine nach einem der Ansprüche 6 bis 8, **dadurch gekennzeichnet, dass** die Tiefe der Nuten (220) von der Oberseite des Siebes (200) zur Unterseite des Siebes (200) zunimmt.

10. Faserstoffsiebmaschine nach einem der Ansprüche 6 bis 9,
**dadurch gekennzeichnet, dass** sich die konkaven Nuten (220) auf der Außenfläche des Siebs (200) der Faserstoffsiebmaschine über denselben Bereich in der Höhe des Siebs (200) erstrecken wie jede Vorderkante (110) der Rotorflügel.

11. Faserstoffsiebmaschine nach einem der Ansprüche 6 bis 10,
**dadurch gekennzeichnet, dass** auf der Außenfläche des Siebes (200) der Faserstoffsiebmaschine mehrere Gruppen von Nuten (220) vorgesehen sind, die sich gemeinsam über die Höhe des Siebes erstrecken.

12. Faserstoffsiebmaschine nach einem der Ansprüche 1 bis 11,
**dadurch gekennzeichnet, dass** das Sieb (200) ein perforiertes Sieb ist.

13. Faserstoffsiebmaschine nach einem der Ansprüche 1 bis 11,
**dadurch gekennzeichnet, dass** das Sieb (200) ein Schlitzsortierer ist.

14. Faserstoffsiebmaschine nach Anspruch 13, **dadurch**
**gekennzeichnet, dass** die Schlitze des Siebes (200) schräg zur Vorderkante (110) der Rotorflügel vorgesehen sind.

15. Faserstoffsiebmaschine nach Anspruch 13, **dadurch**
**gekennzeichnet, dass** die Schlitze des Siebes (200) schräg zur Rotordrehachse vorgesehen sind.

16. Faserstoffsiebmaschine nach einem der Ansprüche 1 bis 15,
**dadurch gekennzeichnet, dass** am Gehäuse der Faserstoffsiebmaschine tangential ein Schwerteilabscheider zum Entfernen von groben Schwerteilen vorgesehen ist.

## Revendications

1. Machine à tamiser une pâte comprenant :
un tamis (200) qui s'étend vers le haut à partir du fond de la machine à tamiser la pâte, et un rotor (100) qui tourne autour de la face extérieure du tamis (200),
dans lequel une sortie d'accepté est disposée à l'intérieur du tamis (200), une entrée de pâte et une sortie de rejet sont disposées à l'extérieur du tamis (200),
dans laquelle les palettes de rotor (101) du rotor (100) s'étendent en porte-à-faux depuis une base de rotor (102) sur la partie supérieure du tamis (200) dans une zone du tamis (200), les palettes de rotor (101) n'étant pas reliées les unes aux autres dans la zone du tamis (200),
dans laquelle les palettes de rotor présentent une rigidité appropriée au dépastillage en coopération avec la face extérieure du tamis,
**caractérisée en ce que**, le tamis (200) de la machine à tamiser la pâte se présente sous la forme d'un cône qui s'effile progressivement vers le bas à mesure qu'il s'étend vers le haut et dans lequel l'angle de tamis α entre le tamis de la machine à tamiser la pâte et le plan est supérieur ou égale à 45°, et inférieur à 90°.

2. Machine à tamiser la pâte (100) selon la revendication 1, **caractérisée en ce que** des bandes de projection (210) sont disposées sur la face extérieure du tamis (200) de la machine à tamiser la pâte.

3. Machine à tamiser la pâte selon la revendication 2,
**caractérisée en ce que** les bandes de projection (210) sur la face extérieure du tamis (200) sont inclinées par rapport au bord avant (110) des palettes de rotor.

4. Machine à tamiser la pâte selon la revendication 2 ou 3, **caractérisée en ce que** sur la face extérieure du tamis (200) de la machine à tamiser la pâte, les bandes de projection (210) s'étendent sur la même plage en hauteur du tamis (200) que chaque bord avant (110) des palettes de rotor.

5. Machine à tamiser la pâte selon l'une quelconque des revendications 2 à 4, **caractérisée en ce que**, plusieurs groups de bandes (210) sont disposés sur la face extérieure du tamis (200) de la machine à tamiser la pâte, s'étendant conjointement sur toute la hauteur du tamis.

6. Machine à tamiser la pâte selon la revendication 1, **caractérisée en ce que** des rainures concaves (220) sont pratiquées sur la face extérieure du tamis (200) de la machine à tamiser la pâte.

7. Machine à tamiser la pâte selon la revendication 6, **caractérisée en ce que** des rainures concaves (220) sur la face extérieure du tamis (200) de la machine à tamiser la pâte sont inclinées par rapport au bord avant (110) des palettes de rotor.

8. Machine à tamiser la pâte selon la revendication 6 ou 7, **caractérisée en ce que** les largeurs des rainures (220) augmentent de la partie supérieure du tamis (200) au fond du tamis (200).

9. Machine à tamiser la pâte selon l'une quelconque des revendications 6 à 8, **caractérisée en ce que** les profondeurs des rainures (220) augmentent de la partie supérieure du tamis (200) au fond du tamis (200).

10. Machine à tamiser la pâte selon l'une quelconque des revendications 6 à 9, **caractérisée en ce que** sur la face extérieure du tamis (200) de la machine à tamiser la pâte, les rainures concaves (220) s'étendent sur la même plage en hauteur du tamis (200) que chaque bord avant (110) de la palette de rotor.

11. Machine à tamiser la pâte selon l'une quelconque des revendications 6 à 10, **caractérisée en ce que** plusieurs groups de rainures (220) sont disposés sur la face extérieure du tamis (200) de la machine à tamiser la pâte, s'étendant conjointement sur toute la hauteur du tamis.

12. Machine à tamiser la pâte selon l'une quelconque des revendications 1 à 11, **caractérisée en ce que** le tamis (200) est un tamis perforé.

13. Machine à tamiser la pâte selon l'une quelconque des revendications 1 à 11, **caractérisée en ce que** le tamis (200) est un tamis à fentes.

14. Machine à tamiser la pâte selon la revendication 13, **caractérisée en ce que** les fentes du tamis (200) sont inclinées par rapport au bord avant (110) des palettes de rotor.

15. Machine à tamiser la pâte selon la revendication 13, **caractérisée en ce que** les fentes du tamis (200) sont inclinées par rapport à l'axe de rotation du rotor.

16. Machine à tamiser la pâte selon l'une quelconque des revendications 1 à 15, **caractérisée en ce qu'**une trappe à déchets est disposée tangentiellement sur le corps de de la machine à tamiser la pâte pour évacuer les déchets lourds grossiers.
